(19) Europäisches Patentamt
European Patent Office
Office européen des brevets

(11) **EP 4 183 826 A1**

(12) **EUROPEAN PATENT APPLICATION**

(43) Date of publication:
**24.05.2023 Bulletin 2023/21**

(21) Application number: **21214526.2**

(22) Date of filing: **14.12.2021**

(51) International Patent Classification (IPC):
**C08K 3/26** *(2006.01)*    **C08K 5/053** *(2006.01)*
**C08L 3/02** *(2006.01)*    **C08L 5/02** *(2006.01)*

(52) Cooperative Patent Classification (CPC):
(C-Sets available)
**C08L 3/02; C05G 5/16; C08K 3/26; C08K 11/00; C08L 5/02;** C08K 5/053; C08K 2003/265    (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2021 PT 2021117586**

(71) Applicant: **Bioworld - Social Impact, Lda**
**4200-135 Porto (PT)**

(72) Inventor: **DOS SANTOS COSTA PEREIRA, Honorata**
**3360-182 Penacova (PT)**

(74) Representative: **Patentree**
**Edificio Net**
**Rua de Salazares, 842**
**4149-002 Porto (PT)**

(54) **TRANSPARENT AND FLEXIBLE BIODEGRADABLE POLYMERIC MATERIAL, PRODUCTION METHOD AND ITS USES**

(57)    The present description concerns a transparent and flexible biodegradable polymeric material, more particularly a biopolymer from food industry waste and by-products, the production method and its uses. This solution can be used in the food industry, in agrochemicals or in soil regeneration.

FIG. 2

(52) Cooperative Patent Classification (CPC): (Cont.)

C-Sets
**C08K 3/26, C08L 3/02;**
**C08K 11/00, C08L 3/02;**
C08K 5/053, C08L 3/02

**Description**

**TECHNICAL FIELD**

The present description concerns a transparent and flexible biodegradable polymeric material, more particularly a biopolymer from waste and by-products of the food industry, method of production and its uses.

**BACKGROUND**

In its pure state, calcium carbonate is a solid compound, in the form of a fine crystalline powder, white in color, odorless, with alkaline properties, decomposed at a temperature of 470°C, density of 2.65 gcm$^{-3}$, stable, non-flammable, non-corrosive, non-bio accumulative and non-toxic.

Because it is not soluble in water, it is found in the sea as a component of shell and coral skeletons. Calcium carbonate is one of the raw materials used in the manufacture of cement, steel, and glass. In winemaking, it is used to lower the acidity of wine, and in agriculture, to correct soil acidity (liming). It is added to toothpastes, acting as an abrasive, and is also used in medicines to treat diseases caused by calcium deficiency, such as osteoporosis. It is also one of the main inputs used in the Solvay Process, an industrial process created by Belgian industrial chemist Ernest Solvay in the mid-19th century to obtain sodium carbonate ($Na_2CO_3$) [5].

Calcium carbonate is present in large quantities in nature, being the main component of limestone and marble, it can also be found in aragonite, calcite, and eggshell [5].

The chemical composition of eggshell is as follows: Calcium Carbonate (95%), Magnesium Carbonate (1%), Calcium Phosphate (1%) and organic matter essentially glycoproteins (4%) [12]. According to INE (2014), in 2013 in mainland Portugal 125 452 tonnes of hen eggs were produced, with the shell representing about 11% of the egg weight, which resulted in 13 799.7 tonnes of eggshell as waste, often responsible for the proliferation of salmonella. This waste, resulting from industrial processes has been used in agriculture to correct the pH of acidic soils. However, according to OLIVEIRA et al. (2013), currently this is an undervalued waste and therefore new measures should be applied to add economic value, such as using it as raw material for other activities. However, eggshell has not yet gained much attention regarding its conversion into new materials.

The waste generated from egg production and consumption is non-toxic, but its accumulation attracts pests and vermin due to the large nutritional content [1].

Document BR112014029845B1 describes xanthan-based compositions for obtaining biocompatible and biodegradable bioplastics and obtained biocompatible and biodegradable bioplastics. It belongs to the field of compositions of bioplastics, biocompatible and biodegradable, environmentally friendly, of fast degradation when compared to conventional ones, edible or not, water-soluble, or not, flexible, semi-flexible and rigid, by the combination of materials.

Document US20180002513A1 relates to a bioplastic composition comprising wheat bran which is a food by-product and a bioplastic pellet / film using the same. More particularly, the present invention relates to a bioplastic composition comprising wheat bran and a bioplastic film using the same wherein the properties of the composition are enhanced to ensure improved properties of the bioplastic film prepared therefrom, thereby showing a carbon reduction effect and providing a substitute for conventional petroleum-derived bioplastic products.

Document EP3305855A2 describes a bioplastic composition comprising wheat bran which is a food by-product and a bioplastic pellet / film using the same. More particularly, the present invention relates to a bioplastic composition comprising wheat bran and a bioplastic film using the same wherein the properties of the composition are increased to ensure improved properties of the bioplastic film prepared therefrom, thereby showing a carbon reduction effect and providing a substitute for conventional petroleum-derived bioplastic products.

In turn, polymers are macromolecules formed by repeating units (monomers) that interact with each other, based on their predominance by covalent bonds, which give the material attributes such as electrical insulation [9]. Plastics, in turn, are materials that have as raw material a synthetic polymerized organic substance, which presents high malleability, easily transformable using heat and pressure, and can be used in the manufacture of various objects [4].

Over time, it became necessary to search for alternatives and studies to produce a plastic that would minimize the impact on the environment. Several researchers have developed the bioplastic, which is made of organic, non-synthetic matter [2]. One of the most efficient polymers in the production of bioplastics, is the starch found in tubers, cereals, and roots. This can be easily transformed into a thermoplastic material, offering an important alternative to replace synthetic polymers in applications where biodegradability is desirable. Starch is a natural polysaccharide formed by two components, amylose, and amylopectin, both made up of repetitive units of D-glycopyrane monomers. Amylose consists of a linear chain, and amylopectin of branched chains. ($\alpha$ 1$\rightarrow$4 and 1$\rightarrow$6 D-glucose bonds, respectively). Starch is presented in the form of granules, their shape and size being characteristic of the plant of origin [2]. The process of plasticization or de-structuring of starch consists in the destruction of the organized structure of the starch granule. This restructuring is done through the casting method, which consists of solubilizing the starch in a solvent and applying it on a support for solvent evaporation and consequent formation of a continuous matrix that gives rise to the films. Starch grains are usually processed by heating to 75°C in aqueous medium, which results in their gelatinization. This process causes loss of molecular order and melting of the starch crystals, due to the breakdown of hydrogen bonds responsible for the crystallinity of the polymer [2]. As the decomposition temperature is lower than the melting and glass transition temperatures (phase transition temperature that occurs in amorphous materials), it becomes necessary to add a plasticizing agent so that its melting and glass transition point decreases [2]. Plasticizers are substances that are added to polymers with the primary objective of increasing their (plasticization) and secondary effect of improving their processability. The plasticizing agent must be polar, hydrophilic, compatible with the base of the polymeric film formation, with a boiling point high enough to avoid its evaporation during the process [7]. Finally, calcium carbonate (or calcite, in natural form) is a mineral that can be occasionally added as an inert filler in thermoplastics. This mineral serves to reinforce some polymer properties, processing properties, among other qualities.

These facts are described to illustrate the technical problem solved by the achievements of the present document.

## GENERAL DESCRIPTION

The present description relates to a polymer, more specifically to resistant, flexible, and transparent bioplastic/biopolymer, wherein the polymer is obtainable from poultry eggshell, a source rich in calcium carbonate, and starch, preferably potato starch. Poultry eggshell, a food waste, but which is produced on a large scale and can be a source of proliferation of salmonella.

In an embodiment, the eggshells were collected in the region of Tábua. Subsequently, their washing, sanitization and dehydration and sieving was carried out. The polymer, preferably the bioplastic/biopolymer, of the present disclosure was obtained by polymerization of starch, extracted from the effluents of the potato processing industry, in acid medium with the addition of eggshells. Surprisingly, it was observed that the mixture of calcium salts from eggshells and the starch from the food industry allow obtaining a resistant, flexible, transparent, and biodegradable polymeric film. Due to the raw material and the biodegradability of the final film the product obtained falls within the bioplastic/biopolymer materials.

The present disclosure relates to a transparent and flexible biodegradable polymeric material comprising calcium salts and potato starch, wherein mechanical strength of the material ranges from 0.014-0.034 N/mm$^2$.

In an embodiment the strength of the material can be calculated in several ways, in the present embodiment the strength of the polymeric film was determined by Young's Modulus, according to the test ASTM D638-14 (2014) [10].

In an embodiment the water absorption rate of the material can be calculated in several ways, in the present embodiment the ASTM D570-98 (2018) test was used as the standard method to determine the water absorption of each polymeric material sample [8], over 40 days.

In an embodiment the biodegradability of the polymeric film was determined according to ASTM D6003-96 (1996) was used as a standard method to determine the mass loss of bioplastics [8], with a duration of 32 days.

In an embodiment, the transparent and flexible biodegradable polymeric material, whose chemical characterization by Fourier Transformed Infrared (FTIR) Universal Attenuated Total Reflectance (UATR) and Transmittance (T) comprises the following functional groups $CH_2$, OH, C=O. The PO and PC type samples also present $CaCO_3$, in their chemical constitution and the PO type samples also present the functional group N=H. Thus, the transparent and flexible biodegradable polymeric material of the present disclosure comprises calcium carbonate, protein fibers and functional groups, wherein the functional groups comprise $CH_2$, OH, C=O and amide groups.

In an embodiment, the source of calcium salt is from eggshells, in particular poultry eggshells; wherein the source of starch is an agri-food effluent, in particular potato starch.

In an embodiment, the biodegradable polymeric material of the present disclosure may comprise 8 to 10% (w/v) is of starch, 2% (w/v) of calcium, optionally a plasticizing agent, and the remainder is an aqueous solvent.

In an embodiment, biodegradable of the present disclosure may comprise 7 to 15% (w/v) starch, 2 - 25 % (w/v) calcium salt, optionally a plasticizing agent, and the remainder is an aqueous solvent.

In an embodiment, the biodegradable polymeric material of the present disclosure may comprise 8 - 10% (w/v) starch, 5 - 20 % (w/v) calcium salt, optionally a plasticizing agent, and the remainder is an aqueous solvent.

In an embodiment, the aqueous solvent comprises organic acid; preferably a weak organic acid, more preferably 1.5 - 3 %(v/v) organic acid; even more preferably acetic acid, lactic acid, citric acid.

In an embodiment, plasticizer can be glycerol, preferably 1-5% (w/v) glycerol, more preferably 2-3% (w/v) glycerol.

In an embodiment, the mass ratio of calcium and starch varies from [1.5 - 6] % (w/w).

In an embodiment, the eggshell particle size ranges from 3 $\mu$m and 300 $\mu$m; more preferably from 4.5 $\mu$m and 200 $\mu$m; more preferably from 10 $\mu$m and 100 $\mu$m. The measurement of the eggshell particle size can be carried out in various ways, in this disclosure the eggshell particle size was carried out based on the standard the particle size analysis by mechanical sieving.

In an embodiment, the biodegradable polymeric material further comprises a dye, preferably wherein the dye is an anthocyanin; more preferably it is a bio choring agent.

In an embodiment, the source of anthocyanins is from red cabbage or beetroot waste.

In an embodiment, the biodegradable polymeric material of the present disclosure may further comprise an additional polymer such as cellulose, or cellulose derivatives, alginate, chitosan, collagen, or mixtures thereof.

In an embodiment, the biodegradable polymeric material of the present disclosure may further comprise silver particles.

In an embodiment, the biodegradable polymeric material of the present disclosure may further comprise a chitin protein.

In an embodiment, the degradability time of the transparent and flexible biodegradable polymeric material described in the present disclosure in soil is at least 30 days, more preferably at least 32 days.

In an embodiment, the biodegradable polymeric material of the present disclosure is presented in the form of a polymeric film.

The present disclosure further relates to the use of the transparent and flexible biodegradable polymeric material described in the present disclosure as a fertilizer.

The present disclosure further relates to an article comprising the polymeric material described in any of the preceding embodiments.

In an embodiment, the article is a film, a net, a coating, a package, or a pellet.

Further described is a method of producing the transparent and flexible biodegradable polymeric material described in any of the foregoing embodiments comprising the following steps:

hydrolyzing starch from a food industry effluent with a weak acid,

adding calcium carbonate;

adding glycerol, mixing the various components at a pH below 5 until a polymerizable mixture is obtained with a viscosity ranging from 67-92 mPa.s at 25°C to obtain a film.

In an embodiment the viscosity of the material can be calculated in several ways, in the present embodiment the viscosity of the paste was determined at 25°C using the SV10 vibrational viscometer.

In an embodiment, wherein the weak acid may have from 5% to 9% acidity.

In an embodiment, the weak acid may be selected from a list consisting of acetic acid, lactic acid, citric acid, ascorbic acid, or mixtures thereof.

the film is that occurs the mixture is poured directly as a layer by molding or by extrusion.

In an embodiment, 8 to 10% (w/v) of the extracted starch can be hydrolyzed in a 2% (w/v) solution of the weak acid with 80 ml to 100 ml of water.

In an embodiment, the step of heating the mixture occurs between 50 - 90 °C, preferably 50 - 65°C.

In an embodiment, the method of the present disclosure comprises adding 1-5% (w/v) glycerol, preferably 2-3% (w/v) glycerol.

In an embodiment, the amount of plasticizing agent is less than the amount of acid so that the breaking of hydrogen bonds present in the bead molecule is effective and forms a uniform polymer during the final retrogradation step.

A further aspect of the present disclosure relates to the use of the transparent and flexible biodegradable polymeric material described in the present disclosure as a soil regenerator.

## BREVE DESCRIÇÃO DAS FIGURAS

For easier understanding, attached are the figures, which represent preferred embodiments that are not intended to limit the object of the present description.

Figure1 - Graphical representations of the "P0"(344b), "PO1" (348), "PO2"(349), "PO3" (350b), "PC1"(345), "PC2" (346), "PC3"(347), "ground"(352) and "Ground after"(353) spectra in overview mode. Represents the spectra.

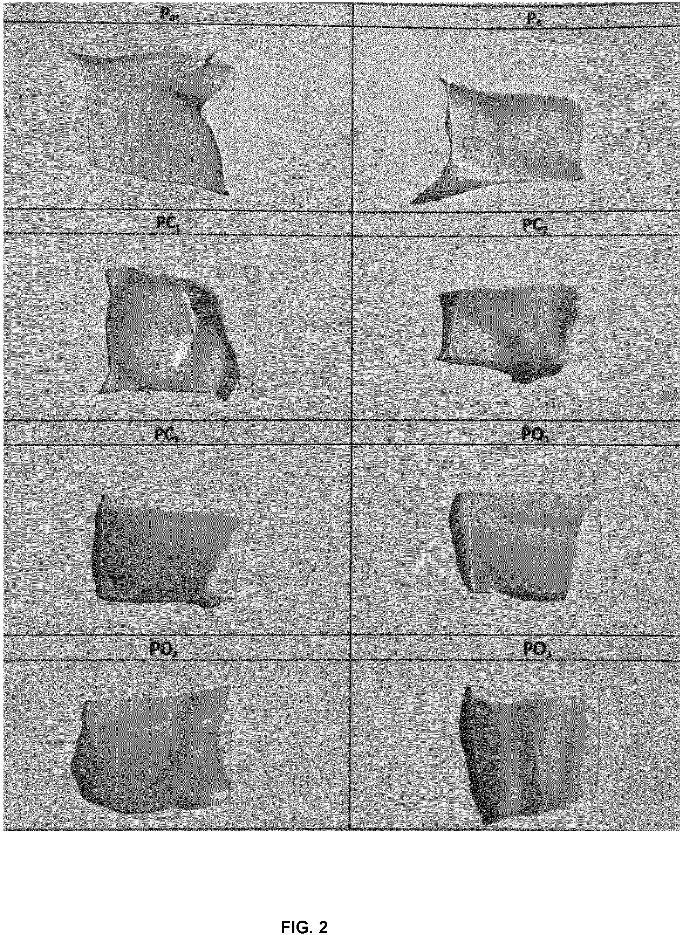

Figure 2 - Representations of polymeric material samples of the present disclosure.

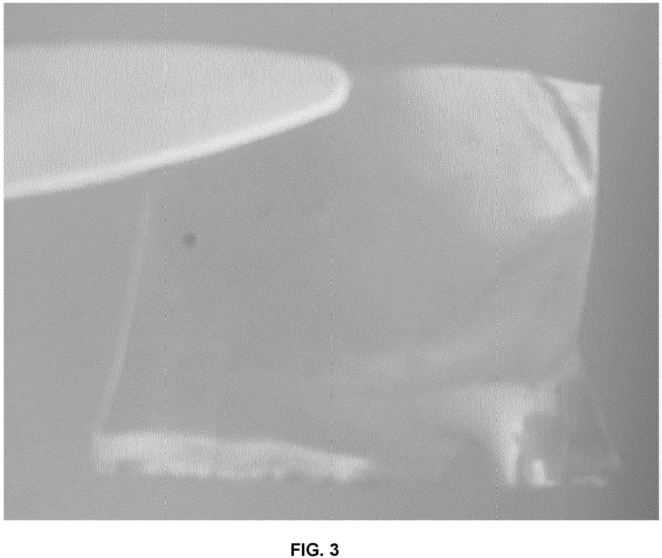

Figure 3 - Representations of a transparent sample of the P0T sample.

Figure 4 - Water absorption test of each sample.

Figure 5 - Water absorption rate of each sample.

Figure 6 - Mechanical resistance test - Young's modulus.

Figure 7 - Biodegradability test of each sample - mass variation over time.

Figure 8 - Rate of loss of mass of each sample, over time.

## DETAILED DESCRIPTION

The present description concerns a transparent and flexible biodegradable polymeric material, more in particular a biopolymer waste and by-products of the food industry, method of production and its uses. The present solution can be used in the food industry, in agrochemicals or in soil regeneration. More in particular to a biopolymer waste and by-products of the food industry, production method and its uses.

In an embodiment, calcium carbonate is an inorganic compound of chemical formula $CaCO_3$, it is a salt that is practically insoluble in water, however, soluble in water carbonated with carbon dioxide, $CO_2$, according to the reaction:

$$CaCO_3\,(s) + H_2O\,(l) + CO_2(g) \rightarrow Ca^{2+}(aq) + 2HCO_3^-\,(aq) \quad (1)$$

Reaction (1) is responsible for the formation of limestone caves, in which upper calcium carbonate structures, known as stalactites, and lower ones, which are named stalagmites, are found.

The following table represents the amount of calcium carbonate from eggshells.

Table 1 - Amount of calcium carbonate from eggshells

| n $CaCO_3$/mol | nHCl excess/mol | nHCl react $CaCO_3$/mol | n$CaCO_3$/ mol | %$CaCO_3$ | Average variance |
|---|---|---|---|---|---|
| 0.00042 | 0.00182 | 0.00068 | 0.00034 | 80.8 | 9.5 |
| 0.00040 | 0.00170 | 0.00080 | 0.00040 | 99.8 | 7.9 |
| 0.00041 | 0.00181 | 0.00069 | 0.00035 | 83.2 | 8.3 |
| | | | Average percentage | 87.9 | Error 9.5 |

In its pure state, calcium carbonate is a solid compound, in the form of a fine crystalline powder, white in color, odorless, with alkaline properties, decomposed at a temperature of 470 °C, of a density of 2.65 g/cm³, stable, non-flammable, non-corrosive, non-bio accumulative and non-toxic.

On the other hand, the preservation and recovery of the environment are no longer exclusive issues for ecologists, becoming part of every citizen's conscience and adding value to companies. The union of the innovation area with the study of waste reuse integrates the advance that today's society requires and the necessary protection of the environment. The chicken eggshell consists essentially of a structure composed of 4 layers: the cuticle on the outer surface, a spongy layer (calcareous) and a lamellar layer inside and an inner membrane.

In an embodiment, nevertheless, this type of waste (eggshell) has all the conditions to be used as a secondary raw material able to replace applications where calcite of geological origin is used as a by-product, for example, in the areas of bioplastics, paper and rubber, and bio ceramics, namely hydroxyapatite, while decreasing this type of waste resulting from food industries. Therefore, the present disclosure has as one of its objectives to measure the amount of calcium carbonate in eggshells, obtain calcium oxide from calcium carbonate, and verify the use of calcium carbonate as a stabilizer for starch bioplastics. In this way, we intend to use eggshells essentially composed of calcium carbonate, in applications where this compound is normally used as an additive in industrial processes, i.e., as a secondary raw material, and on the other hand, to evaluate its use in the synthesis of new materials, such as bio ceramics and biopolymers (bioplastics).

The following embodiment relates to materials and methods for producing the polymeric material described in the present embodiment, including the preparation of eggshell.

In an embodiment, the poultry eggshells were collected in the pastry shops of Oliveira do Hospital, in the morning period, were immediately transported to the laboratory of chemistry and environment, where they were washed with running water, and then manually removed the internal film. In an embodiment, the cleaned shells were sterilized in an autoclave (UNICLAVE 88), for 30 min, at 120 ºC. After the sterilization process, the shells were placed in an oven at 50°C for 24 hours to eliminate water. After cleaning and drying, the peels were ground in a vibratory disc mill (LM1.5). After this process, the shells were sieved, in a vibratory shaker (Gravimeta Retsch). Samples with a particle size between 4.5 $\mu$m and 200 $\mu$m were collected. The samples were packed in analises packs.

In an embodiment, before the sieving process, a sample was taken for X-Ray analysis.

Next, we describe the determination of Calcium Carbonate by volumetric neutralization analysis (back titration). In an embodiment, approximately 0.0400 g of each sample was measured, calcium carbonate was dissolved in 25 mL of HCl, then 5 drops of the indicator phenolphthalein were added. The excess HCl that did not react with the sample was titrated with NaOH solution and, by difference, the Ca content in the eggshell was determined. The tests were performed in triplicate, and the average of the volumes was calculated to determine the percentage of calcium carbonate and calcium oxide.

Next, we describe the synthesis of bioplastic from potato starch with addition of eggshell. In an embodiment, the synthesis of the plastic film on bench, was performed in the materials laboratory at the Physics Department of the University of Aveiro. The starch samples were collected from the effluent of the snack food industry.

In an embodiment, the bioplastic named $P_0$, was obtained by solubilizing 8 to 10% (w/v) of the extracted starch, in 2% (v/v) of organic acid (e.g., acetic acid, lactic acid, citric acid) with (5% to 9% acidity) and 80ml to 100 ml of water. The mixture was heated to 65°C, where 2% (v/v) glycerol was added. The mixture was heated to 90°C. After the increase in viscosity, heating with stirring was maintained, for about 20 minutes. After polymerization, the mixture was transferred to circular molds of 5 cm diameter, spread on film about 1 cm thick, for the biodegradability and water absorption tests. It was placed in 100 mm x 100 mm rectangular molds for the mechanical strength test. The bioplastics named $PC_1$, $PC_2$ and $PC_3$, were obtained by repeating the procedure, adding 5% (w/v), 10%(w/v) and 20%(w/v) calcium carbonate respectively, before the starch polymerization process. The bioplastics named $PO_1$, $PO_2$ and $PO_3$ were obtained by replacing, in the previous process the calcium carbonate by eggshell.

Table 2 - Identification of samples and their components

| Sample | Component 1 | Starch | Organic Acid | Water |
|---|---|---|---|---|
| $PC_1$, | 5% (w/v) $CaCO_3$ | 10% (w/v) | 2% (v/v) acetic acid | 80 ml |
| $PC_2$ e | 10%(w/v) $CaCO_3$ | 10% (w/v) | 2% (v/v) acetic acid | 80 ml |
| $PC_3$ | 20%(w/v) $CaCO_3$ | 10% (w/v) | 2% (v/v) acetic acid | 80 ml |
| $PO_1$, | 5% (w/v) eggshell | 10% (w/v) | 2% (v/v) acetic acid | 80 ml |
| $PO_2$ | 10%(w/v) eggshell | 10% (w/v) | 2% (v/v) acetic acid | 80 ml |
| $PO_3$ | 20%(w/v) eggshell | 10% (w/v) | 2% (v/v) acetic acid | 80 ml |

In an embodiment, the quantitative determination of $CaCO_3$ present in the eggshell was performed by volumetric neutralization analysis, titrating the amount of HCl not consumed in the chemical reaction (back titration). The sample was solubilized in a solution of HCl 0.1 moldm$^{-3}$ in excess, equation 2. The amount of HCl that did not react was titrated with a solution of NaOH 0.1 moldm$^{-3}$ and, by difference, it was possible to determine the percentage of $CaCO_3$ present in the crude eggshell. The same procedure was carried out with the calcined eggshell, however, substituting the $CaCO_3$ for CaO, which facilitated the titration, since the solubilization of the calcined eggshell is total in acid medium, different from the natural eggshell, since there is no solubilization of the organic film. Chemical equation 3 represents the solubilization of the CaO present in the calcined shell, while equation 4 represents the titration of the excess hydrochloric acid:

$$CaCO_3(s) + 2H^+ (aq) + 2Cl^- (aq) \rightarrow Ca^{2+}(aq) + 2Cl^- (aq) + CO_2 (g) + H_2O (l) \qquad (2)$$

$$CaO (s) + 2HCl (aq) \rightarrow CaCl_2(aq) + H_2O (l) \qquad (3)$$

$$HCl (aq) + NaOH (aq) \rightarrow NaCl (aq) + H_2O (l) \qquad (4)$$

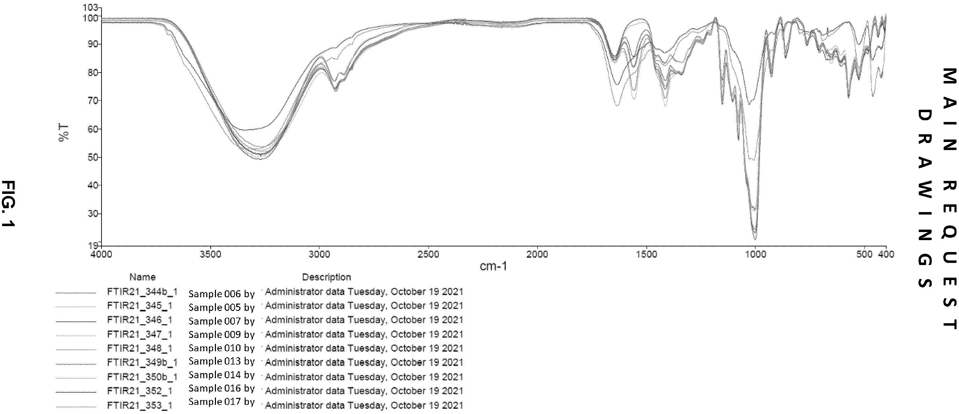

In an embodiment, **Figure 1** shows the percentage of $CaCO_3$ present in the raw eggshell samples and Table 2 shows the percentage of CaO in the calcined eggshell sample. The percentage of CaO present in the calcined eggshell demonstrated that the parameters used (time and temperature) were adequate for the elimination of organic matter present in the eggshell and for the total conversion of $CaCO_3$ into CaO, since the CaO contents are close to 100 %. The results showed that $CaCO_3$ is the majority component of chicken eggshell, however the result, (87.9$\pm$9.5) % is lower than that presented in the bibliography, which refers to a percentage of about 95% of $CaCO_3$, present in eggshell, [1] and [12]. Considering the error, the value is within the expected value, however this difference is because it was very difficult to completely dissolve the $CaCO_3$ sample in hydrochloric acid.

Thus, according to the results this waste material can be used for purification and isolation of $CaCO_3$ and obtaining CaO.

In an embodiment, in view of the preliminary results obtained and their characteristics, from the methodology used, it was possible to obtain plastic films from starch extracted from potato peel. Analyzing the tests performed, it was noticed that the plastics with more consistency, resistance and that dried faster, were those that used calcium salts, which indicates that the $Ca^{2+}$ ion stabilizes the chemical bonds between monomers, conferring greater resistance to the bioplastic. On the other hand, it was found that the degradation of starch granules is very important for the film formation process. Thus, the amount of plasticizing agent should always be lower than the amount of acid so that the breaking of hydrogen bonds present in the granule molecule is effective and forms a uniform polymer during the final retrogradation step.

The following embodiment concerns the Mechanical Resistance test, Water Absorption test and Biodegradability test.

In an embodiment, the biodegradation of the bioplastic/biopolymer was evaluated fortnightly, after total drying of the samples, by placing 20 x 20 mm squares of each of the samples, and synthetic plastic, on garden soil. It was found that after 32 days the samples disappeared, thus proving that the polymeric film with this composition is biodegradable and can be used as fertilizer.

Table 3 - In the following table we present the chemical composition of the samples

| Peak/cm$^{-1}$ | Interpretation | Spectrum present |
|---|---|---|
| 3270 | OH - "vibrational and stretching modes" | All spectra |
| 3408 | OH group stretching | Eggshell |
| 2928 | $CH_2$ asymmetrical stretch | All spectruns |
| 2968 and 2875 | $CH_2$ bending vibration | Eggshell |
| 2518 | Hydrogen group stretching | Eggshell |
| 1799 | C=O stretching | Eggshell |
| 1643 | C=O stretching modes | All spectra |
| 1557 | N-H bending | $PO_1$, $PO_2$, $PO_3$ |
| 1400 to 1426 | $CaCO_3$ asymmetric stretch | All spectra except $P_0$ |
| 1077 | Asymmetrical stretch $CaCO_3$ group | $PC_1$, $PC_2$, $PC_3$, $PO_1$, $PO_2$, $PO_3$ |
| 875 | $CH_2$ bending vibration | Eggshell, "soil" and "soil after |
| 712 | $CH_2$ bending vibration | Eggshell, "soil" and "soil after |

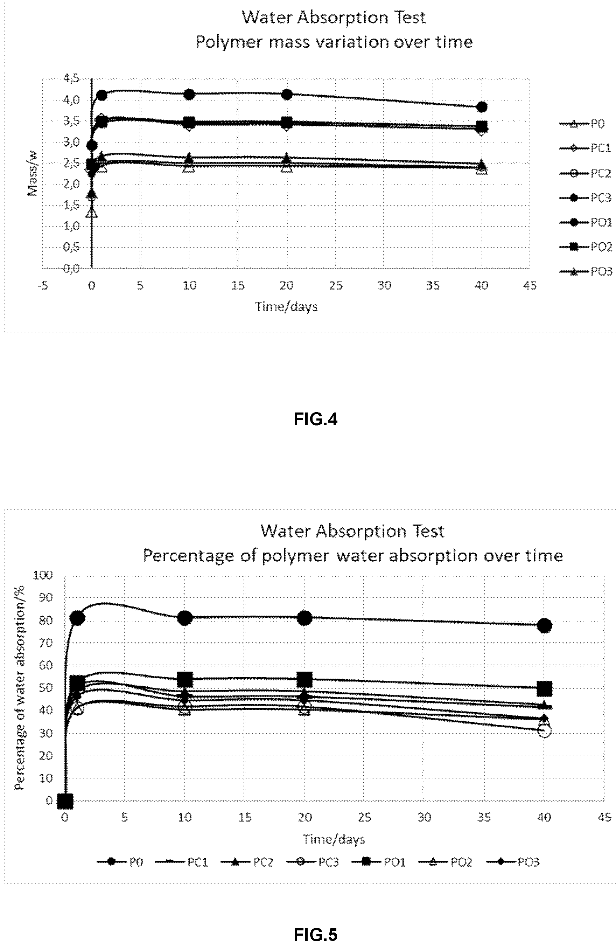

In an embodiment, Figures 4 and 5 show that the $P_0$ sample is the sample that absorbs the greatest amount of water, 81%, in the first 24 hours. The results also show that as the amount of calcium carbonate present in the samples increases, the rate of water absorption decreases. This indicates that calcium carbonate occupies the pores of the polymer, acting as a barrier to water absorption.

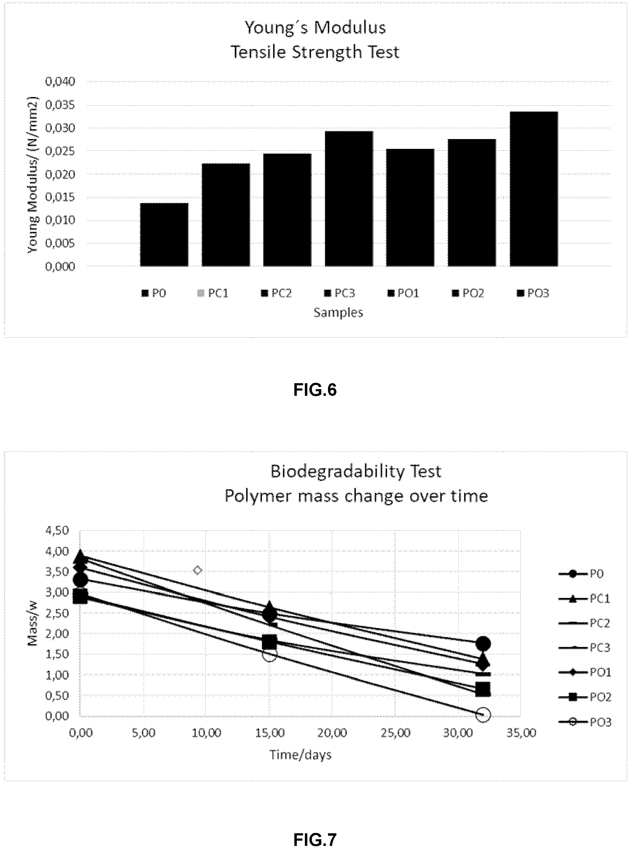

In an embodiment, the analysis of Figure 6, allows to note that the samples with eggshell, present higher values of Young's Modulus. The higher this value, the stronger and more rigid is the material.

In an embodiment, the higher value of Young's Modulus of the eggshell polymeric material, PO samples, compared to the material with calcium carbonate, PC samples, is because eggshell consists of calcium carbonate and protein fibers, indicated by the presence of the N-H group, characteristic of the amino acids that constitute proteins, Table 2.

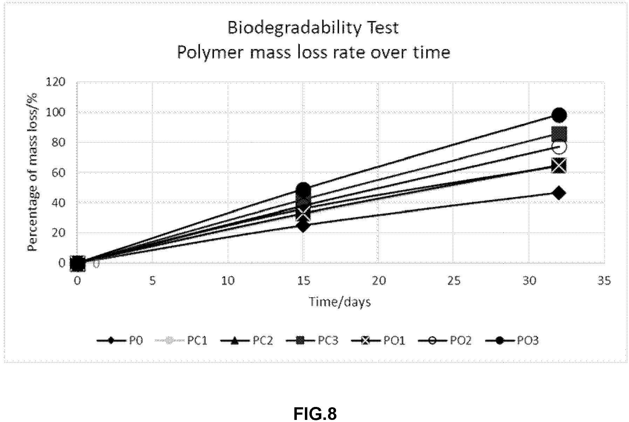

In an embodiment, Figures 7 and 8 show that the samples degrade in the soil over time, and the sample with the largest amount of eggshell, sample $PO_3$, disappears in the soil after 32 days. On the other hand, its degradation increases the amount of calcium carbonate, present in the "soil after", as shown in figure 4. Thus, the hypothesis is that calcium carbonate, combined with optimal conditions of humidity and temperature, promotes the growth of decomposing organisms, thus increasing the degradation of polymeric material.

Thus, it is concluded that the addition of eggshell, reduces the rate of water absorption, increases the mechanical strength, and accelerates the process of degradation of the polymeric material in the soil. The $PC_1$ and $PO_1$ type samples,

can be options for application in agriculture, since, on the one hand, they absorb and retain moisture, minimizing irrigation and, on the other hand, they have calcium carbonate, for soil correction, when the polymer degrades, as indicated in graph 1, by the increase in peak intensity from 1400 nm to 1425 nm, in the "soil after" degradation samples.

The term "comprises" or "comprising" when used herein is intended to indicate the presence of the mentioned features, elements, integers, steps and components, but does not preclude the presence or addition of one or more other features, elements, integers, steps and components, or groups thereof.

The described embodiments are combinable with each other.

The present invention is, of course, in no way restricted to the embodiments described herein, and a person with average knowledge of the field could envisage many possibilities of modifying the same and of substituting technical characteristics for equivalent ones, depending on the requirements of each situation, as defined in the appended claims.

The following claims define additional achievements of the present description.

References

[1] BEZERRA, H. M.; SILVA, T. A. da; LELLO, B. C. Di. Aproveitamento da casca de ovo para a síntese de compostos inorgânicos. Instituto Federal de Educação, Ciência e Tecnologia, Nilopolis, p.12-13, 2012.

[2] BRITO, G. F.; Agrawal, P.; Araújo, e. M.; Mélo, T. J. A; Departamento de Engenharia de Materiais - Universidade Federal de Campina Grande.

[3] Biopolímeros, Polímeros Biodegradáveis e Polímeros Verdes. Revista Eletrônica de Materiais e Processos, Campina Grande, v. 6, n. 2, p. 127-139, 2011.

[4] CASTILHO, Luciano Geraldo de; Centro Paula Souza, Faculdade de Tecnologia Sorocaba. Fidelizar clientes ao tratar resíduos - Ações ambientais no mercado de polímeros, 2011. 74 p, il. Monografia (Tecnólogo).

[5] INFOESCOLA (2019). "Carbonato de Cálcio". Acedido a 3 de abril de 2019, em: https://www.infoescola.com/compostos-quimicos/carbonato-de-calcio/

[6] MALI, Suzana [et al.]. Filmes de amido: produção, propriedades e potencial de utilização. Semina Ciências Agrárias, Londrina, vol. 31, n. 1, p. 137-156, 2010.

[7] MENDES, Fernanda Miranda; Universidade de São Paulo, Instituto de Química de São Carlos. Produção e caracterização de Bioplásticos a partir de Amido de Batata, 2009. 198p, il. Dissertação (Mestrado).

[8] NGUYEN DM, Vi Do TV, Grillet AC, Ha Thuc H & Ha Thuc CN (2016), Biodegradability of polymer film based on low-density polyethylene and cassava starch. International Biodeterioration & Biodegradation 115, 257-265.

[9] OLIVEIRA, D. A., BENELLI, P., AMANTE, E. R., (2013). "A literature review on adding value to solid residues: egg shells". Journal of Cleaner Production, Vol. 46, pp. 42-47.

[10] PENJUMRAS P, Rahman RA, Talib RA & Abdan K (2015), Mechanical properties and water absorption behaviour of durian rind cellulose reinforced poly(lactic acid) biocomposites. Interna tional Journal on Advance Science Engineering Information Technology 5(5), 343-349.

[11] PITT, Fernando D.; BOING, Denis; BARROS, Antonio Andre C. Desenvolvimento histórico, científico e tecnológico de polímeros sintéticos e de fontes renovaveis. Revista de divulgação Científica do Centro Universitário de Brusque, v. 1,n. 10, 2012.

[12] TSAI, W. YANG., J., HSU., H., LIN, C., LIN, K., CHIU, C., (2008). "Development and characterization of mesoporosity in eggshell ground by planetary ball milling". Microporous and Mesoporous Materials, Vol. 111, Ed. 1-3, pp.379-386

## Claims

1. Transparent and flexible biodegradable polymeric material comprising calcium salts and potato starch, wherein the mechanical strength of the material ranges from 0.014 - 0.034 N/mm$^2$.

2. Transparent and flexible biodegradable polymeric material according to the preceding claim comprising calcium carbonate, protein fibers and functional groups, wherein the functional groups comprise groups: $CH_2$, OH, C=O and amide groups.

3. Transparent and flexible biodegradable polymeric material according to any one of the preceding claims wherein wherein the source of calcium salt is eggshell, in particular poultry eggshells; wherein the source of starch is an agri-food effluent, in particular potato starch.

4. Transparent and flexible biodegradable polymeric material according to any one of the preceding claims comprising 7 to 15% (w/v) starch, 2 - 25 % (w/v) calcium salt, optionally a plasticizing agent, and the remainder is an aqueous solvent.

5. Transparent and flexible biodegradable polymeric material according to the preceding claim comprising 8 - 10% (w/v) starch, 5 - 20 % (w/v) calcium salt, optionally a plasticizing agent, and the remainder is an aqueous solvent.

6. Transparent and flexible biodegradable polymeric material according to the preceding claim wherein the aqueous solvent comprises organic acid; preferably a weak organic acid, more preferably 1.5 - 3 % (v/v) organic acid; even more preferably acetic acid, lactic acid, citric acid.

7. Transparent and flexible biodegradable polymeric material according to any one of the preceding claims wherein the mass ratio of calcium salt and starch ranges from 1.5 - 6 (w/w).

8. Transparent and flexible biodegradable polymeric material according to any one of the preceding claims wherein the eggshell particle size ranges from 3 $\mu$m and 300 $\mu$m; more preferably from 4.5 $\mu$m and 200 $\mu$m; more preferably from 10 $\mu$m and 100 $\mu$m.

9. Transparent and flexible biodegradable polymeric material according to any one of the preceding claims wherein the degradability time in soil is at least 30 days, more preferably at least 32 days.

10. Article comprising the polymeric material described in any one of the preceding claims; preferably wherein the article is a film, a net, a coating, a wrapper, or a pellet; more preferably wherein the film thickness ranges from 0.05 cm to 1 cm; preferably from 0.1 to 0.5 cm

11. Method of producing the transparent and flexible biodegradable polymeric material described in any of the preceding claims comprising the following steps:

hydrolyzing starch from a food industry effluent with a weak acid, preferably wherein the weak acid has from 5% to 9% acidity;
adding calcium carbonate;
adding glycerol;
mixing the various components at a pH below 5 until a polymerizable mixture is obtained with a viscosity varying between 67-92 at 25°C in order to obtain a film;
optionally heating the mixture between 50 - 90 °C in order to obtain a film, preferably 50 - 65°C.

12. Method of production according to any one of the preceding claims wherein the weak acid has 5% to 9% acidity; preferably wherein the weak acid is selected from a list consisting of: acetic acid, lactic acid, citric acid, ascorbic acid, or mixtures thereof.

13. Method of production according to any one of the preceding claims comprising hydrolyze 8 to 10% (w/v) of the extracted starch in a 1 - 3% (w/v) solution of the weak acid and 80 ml to 100 ml of water.

14. Method of production according to any one of the preceding claims wherein the amount of glycerol ranges from 1-5% (w/v), preferably 2-3% (w/v) glycerol.

15. Use of the transparent and flexible biodegradable polymeric material described in any of the preceding claims as a soil regenerator or as a fertilizer.

# M A I N   R E Q U E S T
# D R A W I N G S

FIG. 1

FIG. 2

FIG. 3

**FIG.4**

**FIG.5**

**FIG.6**

**FIG.7**

FIG.8

Europäisches
Patentamt

European
Patent Office

Office européen
des brevets

# EUROPEAN SEARCH REPORT

**Application Number**

EP 21 21 4526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BOOTKLAD MUNLIKA ET AL: "Biodegradation of thermoplastic starch/eggshell powder composites", CARBOHYDRATE POLYMERS, APPLIED SCIENCE PUBLISHERS , LTD BARKING, GB, vol. 97, no. 2, 23 May 2013 (2013-05-23), pages 315-320, XP028687319, ISSN: 0144-8617, DOI: 10.1016/J.CARBPOL.2013.05.030 * the whole document * ----- | 1-15 | INV. C08K3/26 C08K5/053 C08L3/02 C08L5/02 |
| Y | SYAFRI EDI ET AL: "Effect of Precipitated Calcium Carbonate on Physical, Mechanical and Thermal Properties of Cassava Starch Bioplastic Composites", INTERNATIONAL JOURNAL ON ADVANCED SCIENCE, ENGINEERING AND INFORMATION TECHNOLOGY, vol. 7, no. 5, 31 October 2017 (2017-10-31), page 1950, XP055925823, ISSN: 2088-5334, DOI: 10.18517/ijaseit.7.5.1292 * the whole document * ----- | 1-15 | |
| Y | US 6 231 970 B1 (ANDERSEN PER JUST [US] ET AL) 15 May 2001 (2001-05-15) * the whole document * ----- | 1-15 | TECHNICAL FIELDS SEARCHED (IPC) C08K C08L |
| Y | WO 2017/007116 A1 (PARK HYEON [KR]; PARK HYE-MYEONG [KR]) 12 January 2017 (2017-01-12) * the whole document * ----- | 1-15 | |
| Y | EA 2019 91718 A1 (POLYMATERIA LTD [GB]) 30 December 2019 (2019-12-30) * the whole document * ----- | 1-15 | |

The present search report has been drawn up for all claims

| Place of search | Date of completion of the search | Examiner |
|---|---|---|
| Munich | 30 May 2022 | Friedrich, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 21 4526**

This annex lists the patent family members relating to the patent documents cited in the above-mentioned European search report.
The members are as contained in the European Patent Office EDP file on
The European Patent Office is in no way liable for these particulars which are merely given for the purpose of information.

**30-05-2022**

| Patent document cited in search report | | Publication date | Patent family member(s) | | Publication date |
|---|---|---|---|---|---|
| US 6231970 | B1 | 15-05-2001 | AT | 423165 T | 15-03-2009 |
| | | | AU | 1585701 A | 24-07-2001 |
| | | | BR | 0016960 A | 15-10-2002 |
| | | | CA | 2396973 A1 | 19-07-2001 |
| | | | CN | 1451027 A | 22-10-2003 |
| | | | DK | 1265957 T3 | 11-05-2009 |
| | | | EP | 1265957 A1 | 18-12-2002 |
| | | | ES | 2322123 T3 | 17-06-2009 |
| | | | JP | 2003519708 A | 24-06-2003 |
| | | | KR | 20020077381 A | 11-10-2002 |
| | | | PT | 1265957 E | 11-05-2009 |
| | | | US | 6231970 B1 | 15-05-2001 |
| | | | WO | 0151557 A1 | 19-07-2001 |
| WO 2017007116 | A1 | 12-01-2017 | KR | 101601867 B1 | 14-03-2016 |
| | | | WO | 2017007116 A1 | 12-01-2017 |
| EA 201991718 | A1 | 30-12-2019 | NONE | | |

For more details about this annex : see Official Journal of the European Patent Office, No. 12/82

## REFERENCES CITED IN THE DESCRIPTION

### Patent documents cited in the description

- BR 112014029845 B1
- US 20180002513 A1
- EP 3305855 A2

### Non-patent literature cited in the description

- **BEZERRA, H. M. ; SILVA, T. A. DA ; LELLO, B. C. Di.** Aproveitamento da casca de ovo para a síntese de compostos inorgânicos. Instituto Federal de Educação, Ciência e Tecnologia, 2012, 12-13
- Biopolímeros, Polímeros Biodegradáveis e Polímeros Verdes. Revista Eletrônica de Materiais e Processos, 2011, vol. 6, 127-139
- **CASTILHO, LUICIANO GERALDO DE.** Ações ambientais no mercado de polímeros. Faculdade de Tecnologia Sorocaba, 2011, vol. 74
- **INFOESCOLA.** Carbonato de Cálcio. *Acedido a 3 de abril de,* 2019, https://www.infoescola.com/compostos-quimicos/carbonato-de-calcio
- **MALI, SUZANA.** Filmes de amido: produção, propriedades e potencial de utilização. Semina Ciências Agrárias, 2010, vol. 31, 137-156
- **MENDES, FERNANDA MIRANDA.** Produção e caracterização de Bioplásticos a partir de Amido de Batata. Universidade de São Paulo, Instituto de Química de São Carlos, 2009, 198
- **NGUYEN DM ; VI DO TV ; GRILLET AC ; HA THUC H ; HA THUC CN.** Biodegradability of polymer film based on low-density polyethylene and cassava starch. *International Biodeterioration & Biodegradation,* 2016, vol. 115, 257-265
- **OLIVEIRA, D. A. ; BENELLI, P. ; AMANTE, E. R.** A literature review on adding value to solid residues: egg shells. *Journal of Cleaner Production,* 2013, vol. 46, 42-47
- **PENJUMRAS P ; RAHMAN RA ; TALIB RA ; ABDAN K.** Mechanical properties and water absorption behaviour of durian rind cellulose reinforced poly(lactic acid) biocomposites. *Interna tional Journal on Advance Science Engineering Information Technology,* 2015, vol. 5 (5), 343-349
- **PITT, FERNANDO D. ; BOING, DENIS ; BARROS, ANTONIO ANDRE C.** Desenvolvimento histórico, científico e tecnológico de polímeros sintéticos e de fontes renovaveis. Revista de divulgação Científica do Centro Universitário de Brusque, 2012, vol. 1
- Development and characterization of mesoporosity in eggshell ground by planetary ball milling. **TSAI, W. ; YANG., J. ; HSU., H. ; LIN, C. ; LIN, K. ; CHIU, C.** Microporous and Mesoporous Materials. 2008, vol. 111, 379-386